# EUROPEAN PATENT APPLICATION

(11) **EP 2 672 353 A1**
(43) Date of publication of application: **11.12.2013**
(21) Application number: 12170819.2
(22) Date of filing: 05.06.2012
(51) Int. Cl.: G05B 23/02, G05B 19/042, H02H 7/04

(54) **Transformer monitoring with a mobile device**

(71) Applicant: ABB Research Ltd., 8050 Zürich (CH)
(72) Inventor: Brönmark, Jonas, 722 27 Västerås (SE); Saers, Robert, SE-722 46 Västerås (SE); Weström, Björn, SE-771 52 Ludvika (SE); Liu, Jing, SE-723 46 Västerås (SE); Vafamand, Najmeh, 722 20 Västerås (SE)
(74) Representative: Savela, Reino Aleksi

(57) **Abstract**

There is provided a method of remote monitoring of at least one transformer. The method comprises generating, by the at least one transformer, data relating to transformer values of the at least one transformer. The method further comprises acquiring, by at least one server, the generated data. The method further comprises transforming, by the at least one server, the acquired data to a format accessible by a mobile communications terminal. The method further comprises wirelessly accessing the transformed data by the mobile communications terminal. A corresponding computer program computer program product and server are also provided.

## Description

### TECHNICAL FIELD

Embodiments presented herein relate generally relate to monitoring of transformers. In particular the enclosed embodiments relate to a method of remote monitoring of at least one transformer, a computer program, a computer program product and a server relating thereto.

### BACKGROUND

Transformers are critical items of equipment in power systems and their correct functioning is essential to the reliable operation of the power system. It is therefore, necessary to monitor the operating condition and performance of transformers in order to avoid or reduce disruption due to sudden unexpected failure. It also helps to save running costs by optimizing maintenance schedules. Several monitoring systems for power transformers have been developed.

The reliability of operation of generation, transmission and distribution networks can be increased by using automatic monitoring systems for transformers - not only for power transformers but also for distribution transformers. Remote monitoring can provide selective sharing of data among multiple sites in the most efficient and cost effective manner. An information centre of a utility acquires information on power plants and on high-voltage /middle-voltage substations from a supervisory control and data acquisition (SCADA) system.

Today operators in the field collect and view values from transformers using both analogue gages and meters, physically located on the transformer device. Or the operators use a server which connects to the transformer and receive the transformer values. Operators can then request to view this data from the server. There are at least two kinds of operators. Firstly, operators located on the field who perform maintenance to the hardware. Secondly, operators located in a local control center, monitoring the status of equipment through an operator workstation. Thirdly, operators, or managers, located in a central control center monitoring and/or overviewing all transformer units (and/or the local control centers).

### SUMMARY

An object of embodiments herein is to provide a method for monitoring of transformers. As noted concluded from above, operators working with maintenance of transformers thus have a need to keep track of transformer values. These values could for example be the temperature of the oil in the transformer and gas in the transformer oil (humidity, C, H, CO, etc.). The inventors of the enclosed embodiments have come to the insight that it may be especially important to keep track if these values as transformers operating outside of the specified levels could result in great damage to both the transformer itself and the surroundings of the transformer.

The inventors of the enclosed embodiments have come to further insights. Firstly, data is, according to the state of the art, not automatically transferred to the operators in the field. The operators in the field thus have to manually fetch data. This may result in that the operator is not immediately notified if an alarm or other deviation is triggered in a transformer. Secondly, operators in the field have to either manually check whether an alarm is active in a transformer or not. Or they have to rely on an operator in a control center to call and inform them about any transformer related issues.

A particular object is therefore to provide a method of remote monitoring of at least one transformer.

According to a first aspect there is presented a method of remote monitoring of at least one transformer, comprising generating, by the at least one transformer, data relating to transformer values of the at least one transformer; acquiring, by a at least one server, the generated data; transforming, by the at least one server, the acquired data to a format accessible by a mobile communications terminal; and wirelessly accessing the transformed data by the mobile communications terminal

Advantageously this allows operators always to be updated with the correct transformer information.

According to a second aspect there is presented a computer program of remote monitoring of at least one transformer, the computer program comprising computer program code which, when run on a processing unit, causes the processing unit to acquire data generated by at least one transformer, the data relating to transformer values of the at least one transformer; transform the acquired data to a format accessible by a mobile communications terminal; and make the transformed data wirelessly accessible by a mobile communications terminal

According to a third aspect there is presented a computer program product comprising a computer program according to the second aspect and a computer readable means on which the computer program is stored.

According to a fourth aspect there is presented a server for remote monitoring of a transformer, the server comprising a receiver arranged to acquire data generated by at least one transformer, the data relating to transformer values of the at least one transformer; a processing unit arranged to transform the acquired data to a format accessible by a mobile communications terminal; and a transmitted arranged to make the transformed data wirelessly accessible by a mobile communications terminal

It is to be noted that any feature of the first, second, third and fourth aspects may be applied to any other aspect, wherever appropriate. Likewise, any advantage of the first aspect may equally apply to the second, third, and/or fourth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRA WINGS

The invention is now described, by way of example, with reference to the accompanying drawings, in which:
Figs 1 and 2 are schematic diagrams illustrating monitoring networks where embodiments presented herein may be applied;
Fig 3 is a schematic diagram showing functional modules of a server;
Fig 4 is a schematic diagram showing functional modules of a mobile communications terminal;
Fig 5 is a schematic diagram of a graphical user interface of a mobile communications terminal;
Figs 6 and 7 are flowcharts of methods according to embodiments; and
Fig 8 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Many transformers are today already equipped with monitoring equipment to keep track of transformer data, such as temperature and cooling capacity. This collected data however is not broadcasted to the operators in the field who are responsible for the transformer maintenance. Instead, operators in the field have to manually read the gauges at site, or request the information from the monitoring equipment.

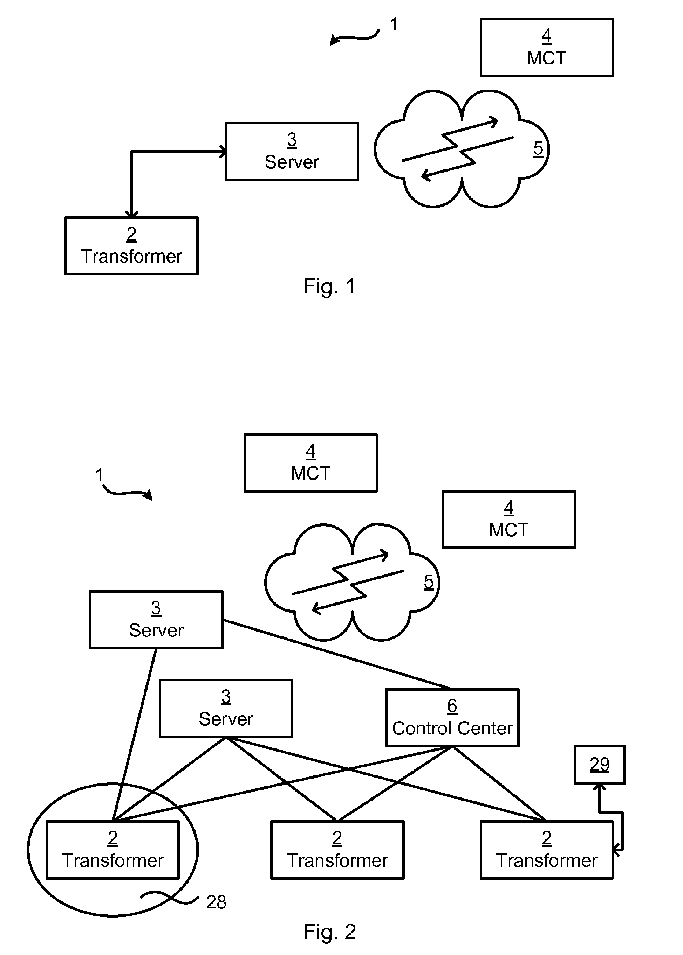

Figs 1 and 2 illustrate schematic diagrams illustrating a monitoring network 1 where embodiments presented herein can be applied. The monitoring network 1 comprises at least one transformer 2. Each transformer 2 is generally associated with a corresponding substation 28, which may be a power substation. The monitoring network 1 further comprises at least one server 3. The at least one server 3 is operatively coupled to the at least one transformer 2. The monitoring network 1 further comprises at least one mobile communications terminal 4. Preferably each operator in the field carries such a mobile communications terminal 4. The at least one mobile communications terminal 4 is arranged to wirelessly communicate with the at least one server 3 over a mobile communications network 5. As is known in the art the mobile communications network 5 comprises radio network controllers, radio base stations or network nodes, etc. The mobile communications network 5 may further be operatively coupled to a number of network servers. The monitoring network 1 further comprises a control center 6 operatively connected to the at least one transformer 2. The control center 6 is responsible for operation of the at least one transformer 2. Each one of the at least one transformer 2 may be associated with its own control center 6. Alternatively one control center 6 is responsible for operation of two or more of the at least one transformer 2. As will be further disclosed below a transformer (or substation) 2 may be monitored by an operator in the field by means of the mobile communications terminal 4.

In general, in the monitoring network 1 data is generated by the at least one transformer 2, measurements are taken, and reports are provided to the operators of the mobile communications terminal 4. The data, measurements and report generally concerns physical properties of the at least one transformer 2. Particular examples include, but are not limited to, temperatures, gas concentrations, overload conditions, power outages, voltage disturbances, earth faults, current unbalance and increase of reactive power etc. Further examples will be provided below.

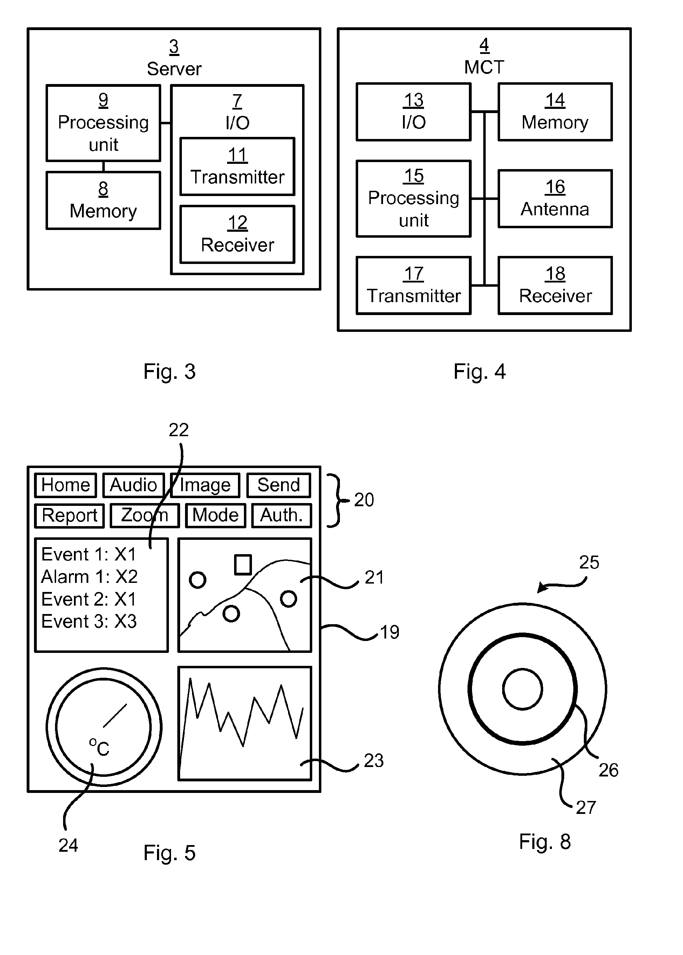

Fig 3 schematically illustrates, in terms of a number of functional modules, the components of a server 3. A processing unit 9 is provided using any combination of one or more of a suitable central processing unit (CPU), multiprocessor, microcontroller, digital signal processor (DSP), application specific integrated circuit (ASIC) etc., capable of executing software instructions stored in a computer program product 25 (as in Fig 8), e.g. in the form of a memory 8. Thus the processing unit 9 is thereby preferably arranged to execute methods as herein disclosed. The memory 8 may also comprise persistent storage, which, for example, can be any single one or combination of magnetic memory, optical memory, solid state memory or even remotely mounted memory. The server 3 further comprises an input/output (I/O) interface 7 for communicating with the at least one transformer 2 and the at least one mobile communications terminal 2 and optionally with other servers. The I/O interface 7 comprises one or more transmitters 11 and receivers 12, comprising analogue and digital components. For example, the transmitters 11 and receivers 12 preferably comprises one or more network interfaces arranged for wired communication with the at least one transformer 2 and for wired communication with the mobile communications network 5, preferably via a network server. The server 3 is thereby able to communicate with the mobile communications terminals 4. The processing unit 9 controls the general operation of the server 3, e.g. by sending control signals to the transmitter 11 and/or receiver 12 and receiving reports from the transmitter 11 and/or receiver 12 of its operation. The communication between each one of the transformers 2 and the server 3 may occur either over a wired connection (fibre optics, copper wires, etc.) or over a wireless connection (radio, Bluetooth, etc.). The communication between each one of the mobile communications terminals 4 and the server 3 occurs at least partly over a wireless radio interface, as defined by the mobile communications network 5.

Fig 4 schematically illustrates, in terms of a number of functional modules, the components of a mobile communications terminal 4. A processing unit 15 is provided using any combination of one or more of a suitable central processing unit (CPU), multiprocessor, microcontroller, digital signal processor (DSP), application specific integrated circuit (ASIC) etc., capable of executing software instructions stored in a computer program product 25 (as in Fig 8), e.g. in the form of a memory 14. Thus the processing unit 15 is thereby preferably arranged to execute methods as herein disclosed. The memory 14 may also comprise persistent storage, which, for example, can be any single one or combination of magnetic memory, optical memory, solid state memory or even remotely mounted memory. The mobile communications terminal 4 further comprises an input/output (I/O) interface 13 for communicating with at least one server 3, at least one control center 6 and other mobile communications terminals 4 as well as for receiving user input, e.g. from a graphical user interface. The I/O interface 13 comprises one or more transmitters 17 and receivers 18, comprising analogue and digital components and a suitable number of antennas 16 for radio communication with the at least one server 3, the at least one control center 6 and other mobile communications terminals 4. The processing unit 15 controls the general operation of the mobile communications terminal 4, e.g. by sending control signals to the transmitter 17 and/or receiver 18 and receiving reports from the transmitter 17 and/or receiver 18 of its operation.

Other components, as well as the related functionality, of the server 3 and the mobile communications terminal 4 are omitted in order not to obscure the concepts presented herein. Further, different types of mobile communications networks 5 are as such known in the art and further description thereof is therefore omitted.

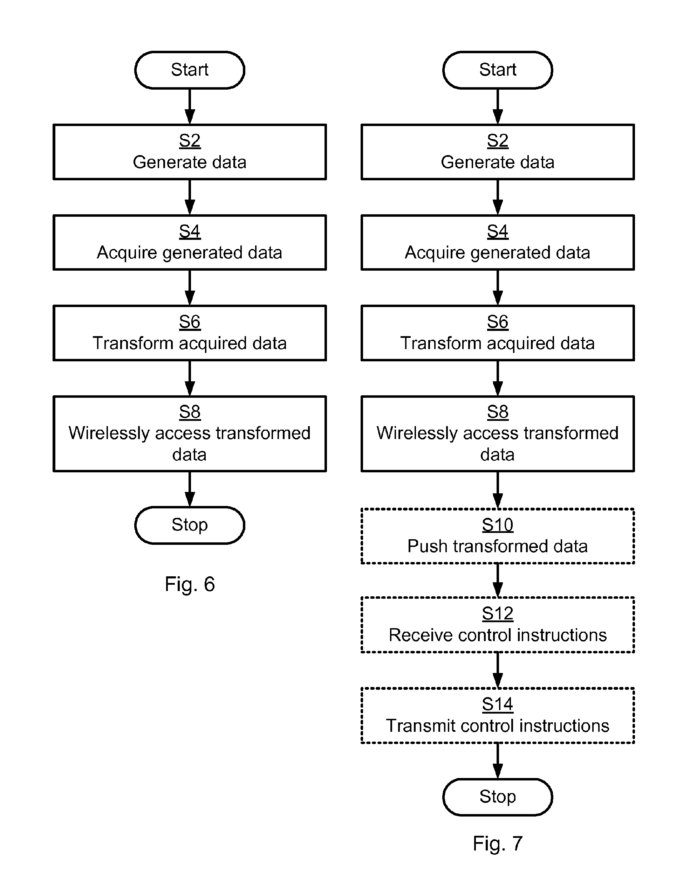

Figs 6 and 7 are flow charts illustrating embodiments of method of remote monitoring of at least one transformer. The methods are preferably performed in at least one server 3 and in the mobile communications terminal 4. The methods are advantageously provided as computer programs 26, such as one or more network monitoring applications. Functionality of the network monitoring applications associated with the at least one server 3 may be downloaded, stored, installed and executed in the at least one server 3. Functionality of the network monitoring applications associated with the mobile communications terminal 4 may be downloaded, stored, installed and executed in the mobile communications terminal 4. Fig 8 shows one example of a computer program product 25 comprising computer readable means 27. On this computer readable means 27, a computer program 26 can be stored, which computer program 26 can cause the processing unit 9, 15 and thereto operatively coupled entities and devices, such as the memory 8, 14, the I/O interface 7, 13_{,} the transmitter 11, 7, the receiver 12, 18 the antenna 16 of the at least one server 3 and corresponding components of the mobile communications terminal 4 to execute methods according to embodiments described herein. In the example of Fig 8, the computer program product 25 is illustrated as an optical disc, such as a CD (compact disc) or a DVD (digital versatile disc) or a Blu-Ray disc. The computer program product could also be embodied as a memory (RAM, ROM, EPROM, EEPROM, SD cards, network drives, etc.) and more particularly as a non-volatile storage medium of a device in an external memory such as a USB (Universal Serial Bus) memory. Thus, while the computer program 26 is here schematically shown as a track on the depicted optical disk, the computer program 26 can be stored in any way which is suitable for the computer program product 25.

The disclosed embodiments relate to remote monitoring of at least one transformer 2 and enable a way for transformer data to be accessible by mobile communications terminals 4.

In a step S2 the at least one transformer 2 generates data. As noted above the monitoring network 1 may comprise any number of transformers 2, each transformer generating data. The data generally relates to transformer values of the at least one transformer 2. The data is preferably associated with physical properties of the at least one transformer 2. Examples of such physical properties include, but are not limited to actual transformer temperatures (windings, oil, hot-spot, tap changer, etc.), ambient temperatures at the site of the at least one transformer 2 (sun, shadow, etc.), transformer gas in oil (humidity, C, H, CO, CₓHₓ, COₓ, etc.), transformer load, peak load for different time intervals, tap changer position, tap changer operations made, calculated remaining operations to next service and to contact change, contact wear calculated for all contacts, cooler condition (fan operation speed, available cooling capacity, time in operation total and since last service, last service report, etc.), hot-spot forecast and event list (alarms, warnings, etc.), bushing condition. The data is preferably associated with physical properties of the at least one transformer 2.

In a step S₄ the generated data is acquired by at least one server 3. The data may be actively collected by the at least one server 3, for example at regular time intervals (every second, every minute, every hour, etc., depending on the data collected) or the data may be pushed to the at least one server 3 by the at least one transformer 2. A typical non-limiting example wherein the data is pushed to the at least one server 3 is when the data relates to abnormal behaviour of the at least on transformer 2. The abnormal behaviour may be related to an alarm event. In general, as noted above, one server 3 may be operatively coupled to more than one transformer 2 and thus acquire data from more than one transformer 2. Similarly, each transformer 2 may be operatively coupled to two or more servers 3.

The data received by the at least one server 3 may be in a raw format, for example representing measurement values of the physical properties mentioned above. In a step S6 the acquired data is by the at least one server 3 therefore transformed. The acquired data is transformed to a format accessible by a mobile communications terminal 4.

Today, operators are often responsible for several transformers which often are located at sites far apart. The operator has to monitor all transformers simultaneously. In a step S8 the transformed data is wirelessly accessed (over the mobile communications networks 5) by at least one mobile communications terminal 4. Thereby the data generated by the at least one transformer 2 is made accessible to operators of the at least one mobile communications terminal 4 independently of the location of the transformers 2 and the mobile communications terminals 4. Having a mobile communications terminal 4 thereby makes remote monitoring of several transformers 2 possible in an even greater extent than today. This will save personal resources for the net owner.

Today warnings or alarms can go unnoticed for a long time. Operators may therefore need to at regular intervals manually check the health of the transformer 2. To be able to send transformer status such as alarms and temperatures directly to the mobile communications terminal 4 carried by the operator may result in better maintenance. Particularly, as noted above, the data generated by the at least one transformer 2 may be pushed to the at least one server 3. Likewise the at least one server 3 may push, step S10, transformed data to the at least one mobile communications terminal 4. The transformed data is typically pushed from the at least one server 3 to the at least one mobile communications terminal 4 when the generated data relates to an alarm event of the at least one transformer 2.

According to embodiments the transformed data is pushed from the at least one server 3 to the at least one mobile communications terminal 4 exclusively in case the generated data relates to an alarm event of the at least one transformer 2. This may minimize traffic. Operators equipped with mobile communications terminals 4 may thereby receive important information pushed to their mobile communications terminals 4 from the transformer 2 and/or the at least one server 3. If an alarm is triggered in a transformer 2, information about that alarm could be automatically sent to the responsible operator who is then able to immediately take appropriate actions to return the transformer 2 to normal conditions. This will lead to faster response time.

In addition to accessing data generated by the at least one transformer 2 the operator is by means of the mobile communications terminal 4 able to set parameters of the at least one transformer 2, thereby enabling remote control as well as remote monitoring. For example, the parameters may relate to desired set point values and alarm limits (*inter alia* for parameters such as currents, voltage, temperature, reactive power, imbalance, voltage peaks and drops). By means of the mobile communications terminal 4 the operator is enabled to receive corresponding information from the at least one transformer 2 (*inter alia* information relating to alarms, their location, time, event and measured values). The mobile communications terminal 4 is thus preferably arranged to receive, step S12, control instructions relating to control of the at least one transformer. Upon reception of such instructions the mobile communications terminal 4 is preferably further arranged to transmit, step S14, the control instructions to the at least one transformer 2 via the at least one server 3.

Preferably the mobile communications terminal 4 comprises a graphical user interface, the functions of which may relate to alarm management, reading and storing of measurements to databases, production of reports, online monitoring, parameter setting, production of a communication log, and system administration in general. Fig 5 schematically illustrates an example of a graphical user interface 19 of a mobile communications terminal 4. By means of the graphical user interface 19 actual temperatures, gas, load values and other properties of the at least one transformer 2 as listed above may be transmitted to the mobile communications terminal 4 and the operator thereof may thereby changes transformer parameters directly from the mobile communications terminal 4. The graphical user interface 19 may have visual indicators 24 for values representing the received transformed data. This may improve the intelligibility of the received data. In terms of temperature the graphical user interface may have support for Celsius, Fahrenheit and Kelvin temperature scales. The graphical user interface may be user controllable by means of a touch screen. The touch screen could be operable by one finger touch as well as so-called by so-called multi-touch. The graphical user interface may be arranged to display the transformer's 2 current zone (safe zone, warning zone and/or alarm zone) and specifically to display any item 22 which may cause an event or alarm. The graphical user interface may further be arranged to display a map 21. By means of such a map feature the physical location of the transformers 2 as well as operators and or mobile communications terminals 4 may be indicated on the graphical user interface 19. The graphical user interface may be arranged to be customized by the operator. Customizable parameters include, but are not limited to: appearance of trend log graphs 23 (which and how items are displayed; in different colours, to have multiple y-axis in the graphs to show different quantities in the same graph). Further, the graphical user interface may be provided with short cuts 20 (for example to different time interval reports or to access the server room), different zoom options, and quick views for different graphs and time intervals (1 minute, 1 hour, 1 day, 2 days, 1 week, etc.). The graphical user interface 19 may have different themes and colour skins for dark and light environments to support better vision for the operator; there may be a night mode and a day mode. The graphical user interface 19 may also have multi-language support. By means of the graphical user interface 19 the operator is also enabled to send reports in plain text or with images to the control center 6. The operator is also enabled to send message with report to other operators having mobile communications terminals 4 running the network monitoring application. The mobile communications terminal 4 may therefore also be arranged to instruct the transformer 2 to record image and/or audio information. This may require that an image and/or sound recorder 29 is operatively connected to the transformer 2. Recorded image and/or audio information may then be transmitted to a control center 6 and/or at least one monitoring server 3 from the transformer 2.

The mobile communications terminal 4 may also be arranged to directly connect the operator with the control center 6 by means of automatically initiating a phone call, a video call, an SMS, a MMS, a report email, etc. as a result of an event and/or alarm. Messages and/or reports may also be transmitted to operators of other mobile communications terminals 4. Further, authorization (Auth.) and security issues may be provided to grant permission to the operators to be able to monitor a specific transformer 2; there may be password protection, and different security levels for different data. Voice recognition, finger print recognition and/or face recognition may be used for login of an operator to the disclosed monitoring service to block hackers to use lost or stolen mobile communications terminals 4.

In order to further increase the security the control center 6 or the at least one transformer 2 may be provided with an accept functionality. If in an accepting position the at least one transformer 2 and/or control center 6 is enabled to receive commands from mobile communications terminal 4. If the command is received by the control center 6 the command may be accepted for example by pushing a button. Operators in the control center 6 are thereby relieved from performing any further action in order for the command to be executed at the transformer 2. If in a non-accepting position, the mobile communications terminal 4 is enabled exclusively to receive information from the transformer 2 and/or control center 6.

The transformed data may preferably further comprises historical data values relating to data previously generated by the at least one transformer 2. Hence also historical values may be wirelessly accessed by the at least one mobile communications terminal 4. Historical values of data, may be presented in a graph 23 and/or table form 22 at the mobile communications terminal 4, for example in order to keep track of the situation and find the origin and source of the occurred alarm and warning situation. As noted above, in order for the at least one mobile communications terminal 4 to wirelessly access the transformed data, the transformed data is transmitted via a radio communications network 5. The transformed data may thus be included in one or more messages which then are transmitted through the radio communications network 5, for example via one or more base stations and/or other types of network nodes. The transformed data itself may advantageously comprise identification of the transformer generating the data included in the one or more message. The transformed data itself may also include a mobile communications terminal identity. The transformed data may thereby be associated with a particular mobile communications terminal 4.

A notification of the alarm event may be indicated (*inter alia* by text, an image, and/or a sound) to the operator of the mobile communications terminal 4 even though the operator have not actively on the mobile communications terminal 4 initiated (or even installed) any dedicated purpose hardware or software, such as a computer program product 25, relating to the network monitoring application. In such a case the notification may be sent as a text message via a short text message service (SMS) or as multimedia message via a multimedia messaging service (MMS), or as an email via a mobile email service. Using mobile communications terminals 4 it is thereby possible for an operator to automatically receive transformer data (active alarms, temperature, cooling, etc.), for example when abnormalities are detected. In other words, operators in the field may be able to receive alarms as they occur. If several alarms occur at a transformer site 28 the operator will thus be notified by all of these alarms. Thus making operations safer as no alarms can be lost. The at least one server 3 may keep sending messages relating to new alarms even though the monitoring network 1 is busy solving earlier alarms/sum-up alarms.

Events and/or alarms that have been attended to may be archived in the at least one server 3 and/or in the mobile communications terminals 4. Operators thereby receive important transformer information to their mobile communications terminals 4 when something happens at the transformer 2. No longer do the operators manually have to check gages etc. at the transformer site, or log in to a server web interface. This will help the operators to earlier detect errors that have occurred in the transformers 2.

It may also be advantageous to, in connection to transmitting the data relating to an alarm event, also transmitting historical data to the at least one mobile communications terminal 4 without such historical data having been explicitly requested by the at least one mobile communications terminal 4. This may be advantageous since the delay for accessing historical data thereby may be minimized.

Conversely, the accessing of the transformed data may be initiated by the at least one mobile communications terminal 4. This is typically the case when an alarm event has not occurred and/or when an operator in the field performs a random non-scheduled test or check of the components and/or functionality of the at least one transformer 2. It may thus also be possible for operators to use mobile communications terminals 4 to access transformer data when needed.

As noted above, the transformed data itself may include a mobile communications terminal identity 4. For example, in case of an event alarm the transformed data may be pushed exclusively to the identified mobile communications terminal 4. According to one embodiment the transformed data is accessible exclusively by the identified mobile communications terminal 4. This may increase safety and security in the monitoring network 1.

The one or more message may further comprise other information. For example, the one or more message may comprise identification of one or more actions associated with the transformed data. For example, the data is preferably associated with a type of event. In such a case the type of event and the transformed data may be included in a message accessible by the at least one mobile communications terminal 4. The one or more actions may be highlighted so as to provide the operator (responsible for maintaining the transformers) of the mobile communications terminal 4 with different alternatives regarding what measures to take, for example in case of an alarm. In order to do so properties of the alarm may be analysed so that the appropriate action(s) can be identified and proposed. Advantageously this analysis is performed in the at least one server 3 since the at least one server 3 has access to data generated by the transformer 2. Alternatively the analysis may be performed in the mobile communications terminal 4.

The invention has mainly been described above with reference to a few embodiments. However, as is readily appreciated by a person skilled in the art, other embodiments than the ones disclosed above are equally possible within the scope of the invention, as defined by the appended patent claims. For example, in the above disclosure, when transformer monitoring is mentioned, one could also consider to have a full substation or electric grid monitoring sent to/viewed on the mobile communications terminal 4.

## Claims

1. A method of remote monitoring of at least one transformer (2), comprising
generating (S2), by said at least one transformer (2), data relating to transformer values of said at least one transformer;
acquiring (S4), by at least one server (3), said generated data;
transforming (S6), by said at least one server, said acquired data to a format accessible by a mobile communications terminal (4); and
wirelessly accessing (S8) said transformed data by said mobile communications terminal.

2. The method according to claim 1, wherein said transformer values are
associated with physical properties of said at least one transformer.

3. The method according to claim 1, wherein said physical properties relate
to at least one of oil temperature, humidity, transformer load, transformer tap changer position, transformer event list, and/or level of gas in oil in said at least one transformer.

4. The method according to claim 1, wherein said transformed data further
comprises historical data values relating to data previously generated by said at least one transformer.

5. The method according to claim 1, wherein said transformed data is
accessed by said mobile communications terminal as a result of said at least one server pushing said transformed data to said mobile communications terminal.

6. The method according to claim 1, wherein said generated data relates to
an alarm event of said at least one transformer.

7. The method according to claim 1, further comprising
pushing (S10), by said at least one server, said transformed data to said mobile communications terminal exclusively in case said generated data relates to an alarm event of said at least one transformer.

8. The method according to claim 1, wherein accessing of said transformed data is initiated by said mobile communications terminal.

9. The method according to claim 1, wherein said transformed data
accessed by said mobile communications terminal is included in a message, said message further comprising identification of at last one action associated with said transformed data.

10. The method according to claim 1, wherein said data is associated with a type of event, wherein said type of event and said transformed data are included in a message accessible by said mobile communications terminal.

11. The method according to claim 1, further comprising:
receiving (S12), by said mobile communications terminal, control instructions relating to control of said at least one transformer; and
transmitting (S14), by said mobile communications terminal, said control instructions from said mobile communications terminal to said at least one transformer via said at least one server.

12. The method according to claim 1, wherein said transformed data includes an identity of said at least one transformer.

13. The method according to claim 1, wherein said transformed data includes a mobile communications terminal identity.

14. The method according to claim 13, wherein said transformed data is pushed exclusively to said identified mobile communications terminal.

15. The method according to claim 13 or 14, wherein said transformed data is accessible exclusively by said identified mobile communications terminal.

16. A computer program (26) of remote monitoring of at least one transformer (2), the computer program comprising computer program code which, when run on a processing unit (9, 15), causes the processing unit to
acquire data generated by at least one transformer (2), said data relating to transformer values of said at least one transformer;
transform said acquired data to a format accessible by a mobile communications terminal (4); and
make said transformed data wirelessly accessible by said mobile communications terminal.

17. A computer program product (25) comprising a computer program (26) according to claim 16 and a computer readable means (27) on which the computer program is stored.

18. A server (3) for remote monitoring of a transformer (2), said server comprising
a receiver (12) arranged to acquire data generated by at least one transformer (2), said data relating to transformer values of said at least one transformer;
a processing unit (9) arranged to transform said acquired data to a format accessible by a mobile communications terminal (4); and
a transmitted (11) arranged to make said transformed data wirelessly accessible by said mobile communications terminal.
